Europäisches Patentamt

European Patent Office

Office européen des brevets

(19)

(11) Numéro de publication: **0 027 420**
**B1**

(12) **FASCICULE DE BREVET EUROPEEN**

(45) Date de publication du fascicule du brevet: **21.12.83**

(51) Int. Cl.³: **B 60 T 8/18, B 60 T 11/34**

(21) Numéro de dépôt: **80401456.1**

(22) Date de dépôt: **10.10.80**

(54) Correcteur de freinage pour double circuit de freinage.

(30) Priorité: **10.10.79 FR 7925199**

(43) Date de publication de la demande:
**22.04.81 Bulletin 81/16**

(45) Mention de la délivrance du brevet:
**21.12.83 Bulletin 83/51**

(84) Etats contractants désignés:
**DE GB IT**

(56) Documents cités:
**DE - A - 2 919 078**
**FR - A - 2 074 521**
**FR - A - 2 237 788**
**FR - A - 2 297 756**
**FR - A - 2 306 107**
**FR - A - 2 369 953**
**FR - A - 2 370 212**
**FR - A - 2 385 567**

**Le dossier contient des informations techniques présentées postérieurement au dépôt de la demande et ne figurant pas dans le présent fascicule.**

(73) Titulaire: **SOCIETE ANONYME D.B.A.**
**Centre Paris Pleyel**
**F-93521 St-Denis Cédex 01 (FR)**

(72) Inventeur: **Carré, Jean-Jacques**
**100 Avenue du Président Wilson**
**F-93100 Montreuil (FR)**
Inventeur: **Riquart, Christian**
**33 rue Fessart**
**F-75019 Paris (FR)**

(74) Mandataire: **Poidatz, Emmanuel et al,**
**Service Brevets Bendix 44 rue François 1er**
**F-75008 Paris (FR)**

Courier Press, Leamington Spa, England.

Correcteur de freinage pour double circuit de freinage

L'invention se rapporte aux valves correctrices de freinage pour double circuit de freinage de véhicule automobile, particulièrement destinées aux circuits de freinage dits en "X" dans lesquels deux sources de fluide sous pression—par exemple les deux chambres d'un maître-cylindre tandem—alimentent chacune un moteur de frein associé à une roue avant d'un côté du véhicule et un moteur de frein associé à une roue arrière de l'autre côté du véhicule. Ces valves correctrices de freinage sont destinées à limiter et/ou réduire la pression admise aux moteurs de freins arrière lorsque la pression délivrée par le maître-cylindre dépasse une pression dite "de coupure" déterminée par les caractéristiques de la valve correctrice. Une telle valve est décrite dans la demande de brevet français FR—A—2 306 107.

En cas de défaillance de l'un des circuits, il se pose un problème important lorsqu'on désire effectuer un report de la pression de coupure dans le circuit intact; en effet, dans ce cas, le capacité de freinage étant pratiquement diminuée de moitié, il est nécessaire d'admettre au moteur de frein arrière associé au circuit intact une pression de freinage supérieure.

Dans le document déjà cité, un tel report est obtenu de la manière suivante: une force de commande est répartie, grâce à des moyens diviseurs comprenant un élément de transmission, en deux demi-forces de commande agissant sur deux pistons de commande des valves et cet élément de transmission est susceptible de coopérer avec un appui distinct des deux pistons pour modifier, dans le rapport des bras de levier entre l'appui et les deux pistons respectivement, la répartition de la force de commande entre les deux pistons.

Un système analogue est également décrit dans le document FR—A—2 074 521.

Dans le but de s'affranchir de la nécessité d'un tel appui distinct des deux pistons, par rapport au FR—A—2 306 107 l'appui décrit déjà un correcteur de freinage, pour double circuit de freinage de véhicule automobile, comprenant un corps, deux alésages parallèles identiques dans ledit corps définissant entre eux un axe de symétrie, chacun desdits alésages communiquant avec un orifice d'entrée et un orifice de sortie correspondants, deux pistons identiques coulissant dans lesdits alésages, chacun desdits pistons commandant les déplacements d'un élément de valve contrôlant l'écoulement d'un fluide sous pression entre l'un desdits orifices d'entrée et l'orifice de sortie qui lui correspond, lesdits pistons présentant chacun une extrémité se projetant à l'extérieur dudit corps, et un ensemble répartiteur susceptible de générer, à partir d'une force de commande, deux forces pilotes agissant sur lesdites extrémités pour solliciter les pistons vers l'intérieur du corps dans le sens de l'établissement dudit écoulement de fluide, ledit fluide sous pression sollicitant les pistons vers l'extérieur du corps dans le sens de l'interruption de l'écoulement de fluide, ledit ensemble répartiteur comprenant des moyens diviseurs pour diviser ladite force de commande en deux demi-forces de commande égales appliquées chacune auxdits pistons et sollicitant ces derniers vers l'intérieur dudit corps, le correcteur de freinage selon l'invention est caractérisé en ce que ledit ensemble répartiteur comprend: un couvercle monté fixe sur ledit corps, deux poussoirs identiques coulissant dans ledit couvercle parallèlement auxdits pistons et susceptibles de venir en butée sur les extrémités de ces derniers, lesdits moyens diviseurs appliquant lesdites demiforces de commande auxdits pistons via lesdits poussoirs, des moyens élastiques pour engendrer une force de réaction sollicitant les pistons vers l'extérieur dudit corps et un élément de transmission en contact avec lesdits poussoirs et seulement avec ceux-ci, ledit élément de transmission répartissant ladit force de réaction en deux forces de réaction partielles appliquées chacune à l'un desdits poussoirs en sens opposé auxdites demiforces de commande, chaque poussoir étant de ce fait soumis à deux forces opposées, une demi-force de commande et une force de réaction partielle dont la résultante constitue ladite force pilote, ledit élément de transmission étant susceptible d'être en contact avec lesdits poussoirs suivant deux modes: un premier mode, lorsque les deux orifices d'entrée reçoivent du fluide sous pression, dans lequel les surfaces de contact entre l'élément de transmission et les poussoirs sont disposées de façon symétrique par rapport audit axe de symétrie, et un second mode, lorsque seul l'un des deux orifices d'entrée reçoit du fluide sous pression, dans lequel, suite à un basculement de l'élément de transmission, les surfaces de contact entre ce dernier et les poussoirs sont disposées de façon dissymétrique par rapport audit axe de symétrie, dont il résulte une répartition de la force de réaction en deux forces partielles inégales et une inégalité correspondante des deux forces pilotes.

On notera que l'invention permet d'accroître la pression "de coupure" de l'un des circuits en cas de défaillance de l'autre circuit. En effet, dans ce cas, seul le piston associé au circuit intact est susceptible de se déplacer à l'encontre de la force pilote exercée par le poussoir correspondant. Comme expliqué en détail dans la description qui va suivre, il s'ensuite un déséquilibre au niveau du partage de la force de réaction agissant sur l'élément de transmission et un accroissement de la force pilote agissant sur le piston associé au circuit intact, dont résulte un accroissement de la pression "de coupure" de ce circuit.

Selon une autre caractéristique, les poussoirs du correcteur sont soumis à une pression de fluide provenant du circuit hydraulique de suspension du véhicule lorsque celui-ci possède un tel circuit de suspension.

Ceci permet d'asservir de manière simple le fonctionnement du correcteur à l'état de charge du véhicule en évitant les problèmes liés aux transmissions mécaniques entre parties suspendues et non-suspendues du véhicule comme bien connu des spécialistes.

L'invention sera maintenant décrite en se référant aux dessins annexés dans lesquels:

— la figure 1 est une vue en coupe longitudinale d'une valve correctrice de freinage selon l'invention;

— la figure 2 est une représentation schématique d'un élément de transmission et de deux poussoirs de la valve de la figure 1, dans les positions qu'ils occupent en fonctionnement normal; et

— la figure 3 est une représentation schématique analogue à celle de la figure 2, les éléments précités étant dans les positions qu'ils occupent en cas de défaillance de l'un des circuits de freinage.

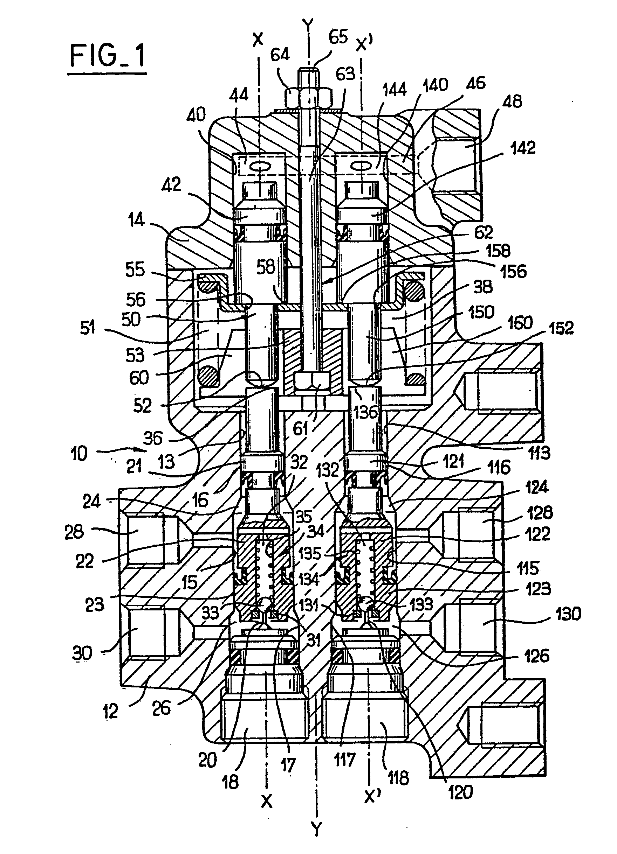

Si l'on considère la figure 1, un correcteur (10) pour double circuit de freinage comprend un corps (12), fermé à sa partie supérieure par un couvercle (14), et dans lequel sont réalisés deux alésages étagés identiques (16, 116) à axes parallèles XX (ou X'X') et ayant un axe de symétrie générale YY. Chaque alésage (16, 116) comprend une portion de petit diamètre (13, 113), une portion de diamètre moyen (15, 115) et une portion de grand diamètre (17, 117) fermée par un bouchon (18, 118) comportant un poussoir (20, 120) dont le rôle sera précisé ultérieurement. Dans chaque alésage (16, 116) est monté un piston étagé (22, 122) dont la portion de petit diamètre (21, 121) coulisse dans la portion de petit diamètre (13, 113) de l'alésage et dont la portion de grand diamètre (23, 123) coulisse dans la portion de diamètre moyen (15, 115) de l'alésage Le piston (22, 122) définit avec l'alésage (16, 116) d'une part entre ses portions (21, 121) et (23, 123) une première chambre dite chambre d'entrée (24, 124) et d'autre part entre la portion (23, 123) et le bouchon (18, 118) une seconde chambre dite chambre de sortie (26, 126). La chambre d'entrée (24, 124) est reliée par l'intermédiaire d'un orifice d'entrée (28, 128) à une source de pression hydraulique de freinage indépendante (non représentée), et la chambre de sortie (26, 126) est reliée par l'intermédiaire d'un orifice de sortie (30, 130) à un jeu de moteurs de freins du véhicule (également non représentés). Les sources de pression indépendantes sont réalisées à titre d'exemple par un

maître-cylindre tandem classique d'un quelconque type connu.

Le piston (22, 122) est percé d'un passage (32, 132) comprenant une partie axiale et une partie radiale, dans lequel est disposée une valve à bille (34, 134) composée d'un siège annulaire (31, 131), d'une bille (33, 133) et d'un ressort (35, 135).

Enfin, l'extrémité supérieure (36, 136) du piston (22, 122) se projette dans une cavité (38) ménagée à la partie supérieure du corps (12) fermée par le couvercle (14).

Le couvercle (14) est percé de deux alésages borgnes parallèles parallèles (40) et (140) dans lesquels coulissent de façon entanche deux poussoirs identiques (42, 142) définissant avec lesdits alésages borgnes deux chambres de commande (44, 144) reliées l'une à l'autre par un passage (46) qui débouche dans un orifice (48) relié au système de suspension hydraulique du véhicule (non représente) de telle sorte qu'il règne dans les deux chambres de commande (44, 144) une pression $P_h$ représentative de la charge supportée par l'essieu arrière du véhicule.

Les poussoirs (42, 142) comportent à leurs extrémités inférieures des prolongements de diamètre réduit (50, 150) dont les extrémités (52, 152) sont en contact avec les extrémités (36, 136) des pistons (22, 122).

Dans la cavité (38) est placé un ressort de réaction (51) emprisonné entre une plaque de butée (53) et un élément de transmission (55), qui a la forme générale d'un disque et comporte deux ouvertures (56, 156) symétriques par rapport à l'axe de symétrie YY, traversées respectivement par les prolongements (50, 150) des poussoirs (42, 142). L'élément (55) est en contact avec des épaulements (58, 158) prévus sur les poussoirs (42, 142), ces épaulements constituant des surfaces d'appui réceptrices pour les poussoirs. Les surfaces annulaires situées en vis-à-vis des épaulements (58, 158) et entourant les ouvertures (56, 156) constituent des surfaces d'appui émettrices pour l'élément de transmission. La plaque (53) comporte deux échancrures (60, 160) permettant le passage des prolongements (50, 150) des poussoirs (42, 142) et des extrémités (36, 136) des pistons.

En dernier lieu, la position axiale de la plaque (53) par rapport aus poussoirs (42, 142) peut être ajustée au moyen d'un ensemble vis (62)-écrou (64). La vis (62) comporte d'une part une tête (61), reçue dans une cavité complémentaire de la plaque (53) pour empêcher la rotation de la vis (62) par rapport à celle-ci, d'autre part une tige (63) traversant successivement la plaque (53), l'élément de transmission (55) et le couvercle (14), et enfin une partie filetée (65) sur laquelle l'écrou (64) est vissé jusqu'en butée contre la couvercle (14).

Le couvercle (14), les chambres de commande (44, 144) et les poussoirs (42, 142) constituent des moyens diviseurs destinés à diviser une force de commande en deux demi-forces de commande appliquées chacune à l'un des poussoirs (42, 142).

En outre, l'ensemble regroupant ces moyens diviseurs, le ressort de réaction (51), la plaque de butée (53) et l'élément de transmission (55) constitue un ensemble répartiteur susceptible de générer, à partie de cette force de commande, deux forces pilotes sollicitant les deux pistons dans le sens tendant à provoquer l'ouverture des valves à bille, comme il apparaîtra à la lecture de la description ci-après du fonctionnement du correcteur qui vient d'être décrit.

Si l'on suppose le véhicule immobile et en l'absence de toute action de freinage, il règne une faible pression résiduelle aux orifices d'entrée (28, 128) et aux orifices de sortie (30, 130). La pression $P_h$ régnant dans le circuit hydraulique de suspension est transmise à l'orifice (48) et par le passage (46) aux chambres de commande (44, 144). Cette pression dite de commande, exerce sur les poussoirs (42, 142) une force de commande $F_c$ divisée en deux demi-forces de commande $Fc/2$ dirigée vers le bas si l'on considère la figure 1 c'est-à-dire vers l'intérieur du corps (12). L'ensemble chambres de commande, poussoirs constitue deux des moyens diviseurs pour diviser la force de commande en deux demi-forces de commande égales $F_c/2$ qui repoussent les pistons (22, 122) en butée contre les bouchons (18, 118) de telle sorte que les poussoirs (20, 120) dégagent les billes (33, 133) de leurs sièges (31, 131).

Les poussoirs (42, 142) occupent des positions axiales identiques; il en résulte que les surfaces d'appui émettrices et réceptrices de l'élément de transmission (55) et des poussoirs coopèrent de manière symétrique et que la force de réaction R exercée par le ressort (51) est répartie en deux forces de réaction partielles r et r' égales à R/2 et dirigées suivant les axes XX et XX' respectivement. Il en résulte également que les deux poussoirs exercent sur les pistons (22, 122) deux forces pilotes $F_p$ et $F'_p$ égales entre elles.

Lors d'une action de freinage normale, il règne aux orifices (28, 128) des pressions d'entrée sensiblement égales. Les valves (34, 134) étant ouvertes, ces pressions d'entrée sont transmises aux orifices de sortie (30, 130) où il règne par conséquent des pressions de sortie sensiblement égales entre elles et égales aux pressions d'entrée. De ce fait, les pistons (22, 122) sont soumis à des forces dirigées vers le haut. c'est-à-dire vers l'extérieur du corps (12).

Tant que ces forces sont inférieures aux forces pilotes $F_p$ et $F'_p$, les deux pistons restent immobiles, les valves (34, 134) restent ouvertes et les pressions de sortie restent égales aux pressions d'entrée.

Par contre, lorsque les pressions d'entrée atteignent une pression dite de coupure $P_c$, les pistons (22, 122) sont alors susceptibles de se déplacer simultanément vers le haut, provoquant la fermeture des valves à bille (34, 134). Lorsque les pressions d'entrée dépassent cette valeur $P_c$, les pressions de sortie sont corrigées de telle sorte que l'accroissement de la pression de sortie soit proportionnellement inférieur à celui de la pression d'entrée, et ce, de manière identique pour les deux circuits, comme il est bien connu dans la technique.

Il va de soi que l'on peut choisir, en variante de l'invention, des pistons de section efficace constante, cette variante fonctionnant alors en simple limiteur de pression, la pression de sortie étant alors limitée à une valeur fixe pour une charge donnée du véhicule.

On remarque que la pression de coupure $P_c$ dépend d'une part de l'ajustement de la force de réaction R grâce à l'ensemble vis (62)-écrou (64) et d'autre part de la charge du véhicule; en effet, la pression $P_h$ étant directement liée à cette charge, il en est de même pour la force de commande $F_c$.

En cas de défaillance de l'un des circuits de freinage, l'appareil décrit fonctionne de la manière suivante:

On suppose qu'il y a, par exemple, absence de pression d'entrée à l'orifice (128). Tant que la pression d'entrée régnant à l'orifice (28) reste inférieure à $P_c$, le piston (22) reste immobile, les éléments de l'appareil occupent les positions qu'ils occupent normalement et la pression de sortie à l'orifice (30) est égale à la pression d'entrée comme précédemment.

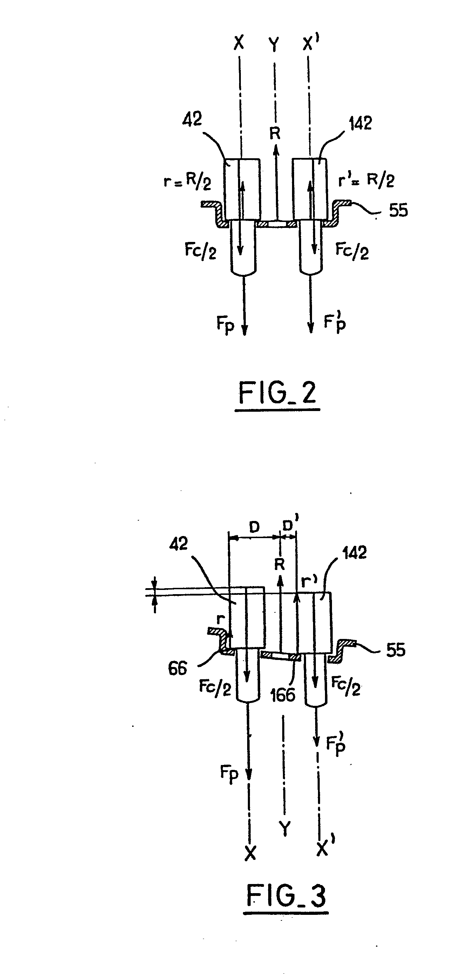

Par contre, lorsque la pression d'entrée atteint la valeur $P_c$, le piston (22) commence à se déplacer vers le haut, tandis que le piston (122) reste immobile, en butée sur le bouchon (118). Il s'ensuit que l'élément de transmission (55) subit un basculement dans le sens horaire, si l'on considère la figure 1, et que la répartition de la force de réaction R subit une profonde modification, comme il va être expliqué en se référant aux figures 2 et 3.

A la figure 2 sont représentés les poussoirs (42, 142) et l'élément de transmission (55) dans les positions qu'ils occupent en fonctionnement normal. Les forces auxquelles les poussoirs sont soumis ont également été représentées. Comme il a été expliqué ci-dessus, les deux forces de réaction partielles r et r' sont égales à R/2 et dirigées suivant les axes XX et X'X' des poussoirs, et les deux forces pilotes $F_p$ et $F'_p$ sont égales.

A la figure 3 sont représentés les poussoirs (42, 142) et l'élément de transmission (55) dans les positions qu'ils occupent en cas d'absence de pression d'entrée à l'orifice (128). Comme il vient d'être expliqué, lorsque le piston (22) repousse le poussoir (42) vers le haut, l'élément de transmission (55) subit un basculement dans le sens horaire. Les surfaces d'appui émettrices et réceptrices de l'élément de transmission et des poussoirs ne sont plus au contact les unes des autres. Le contact entre élément de transmission et poussoir est alors établi en deux zones (66, 166), situées sur les arêtes des épaulements (58, 158) et dont les distances par rapport à l'axe YY sont respectivement D et D', D' étant inférieure à D.

La force de réaction R est alors répartie entre les deux poussoirs en deux forces de réaction partielles:

$$r = R \frac{D'}{D+D'} \quad \text{et} \quad r' = R \frac{D}{D+D'}$$

r étant inférieure à R/2. La force pilote $F_p$ que le poussoir (42) exerce sur le piston (22) devient supérieure à $F'_p$.

Cette force pilote est par conséquent accrue. Le piston (22) ne peut donc se déplacer vers le haut tant que la pression d'entrée n'atteint pas une nouvelle valeur $P'_c$ supérieure à $P_c$, et la pression de sortie reste égale à la pression d'entrée. Ce n'est que lorsque la pression d'entrée atteint la valeur $P'_c$ que le piston peut à nouveau se déplacer vers le haut et que la pression de sortie subit un effet de limitation par actionnement de la valve (34) comme déjà expliqué. En cas de défaillance de l'autre circuit de freinage, le système fonctionne de manière symétrique.

En résumé, en cas de défaillance de l'un des circuits de freinage, la valve correctrice selon l'invention permet d'augmenter la pression de coupure dans le circuit intact et par conséquent d'augmenter la capacité de freinage de la roue arrière alimentée par ce circuit.

Dans les variantes non représentées de l'invention, la pression $P_h$ peut être obtenue au moyen d'un générateur quelconque sensible à la charge du véhicule.

On pourra également remarquer que la pression $P_h$ peut être une pression fixe, les caractéristiques du correcteur étant alors indépendantes de la charge du véhicule.

De plus, la force de commande $F_c$ et les demi-forces de commande $F_c/2$ peuvent être engendrées par un système mécanique asservi ou non à la charge du véhicule, notamment deux ressorts montés en parallèle et agissant séparément sur chaque poussoir.

## Revendications

1. Correcteur de freinage, pour double circuit de freinage de véhicule automobile, comprenant un corps (12), deux alésages parallèles identiques (16, 116) dans ledit corps définissant entre eux en axe de symétrie (YY), chacun desdits alésages communiquant avec un orifice d'entrée (28, 128) et un orifice de sortie (30, 130) correspondants, deux pistons identiques (22, 122) coulissant dans lesdits alésages, chacun desdits pistons commandant les déplacements d'un élément de valve (34, 134) contrôlant l'écoulement d'un fluide sous pression entre l'un desdits orifices d'entrée et l'orifice de sortie qui lui correspond, lesdits pistons (22, 122) présentant chacun une extrémité (36, 136) se projetant à l'extérieur dudit corps (12), et un ensemble répartiteur (14, 42, 142, 51, 55) susceptible de générer, à partir d'une force de commande (Fc), deux forces pilotes (Fp, Fp') agissant sur lesdites extrémités (36, 136) pour solliciter les pistons (22, 122) vers l'intérieur du corps (12) dans le sens de l'établissement dudit écoulement de fluide, ledit fluide sous pression sollicitant les pistons vers l'extérieur du corps dans le sens de l'interruption de l'écoulement de fluide, ledit ensemble répartiteur comprenant des moyens diviseurs (14, 42, 142) pour diviser ladite force de commande (Fc) en deux demi-forces de commande (Fc/2) égales appliquées chacune auxdits pistons (22, 122) et sollicitant ces derniers vers l'intérieur dudit corps, caractérisé en ce que ledit ensemble répartiteur comprend: un couvercle (14) monté fixe sur ledit corps (12), deux poussoirs (42, 142) identiques coulissant dans ledit couvercle (14) parallèlement auxdits pistons (22, 122) et susceptibles de venir en butée sur les extrémités (36, 136) de ces derniers, lesdits moyens diviseurs appliquant lesdites demi-forces de commande (Fc/2) auxdits pistons via lesdits poussoirs (42, 142) des moyens élastiques (51) pour engendrer une force de réaction (R) sollicitant les pistons vers l'extérieur dudit corps et un élément de transmission (55) en contact avec lesdits poussoirs et seulement avec ceux-ci, ledit élément de transmission répartissant ladite force de réaction (R) en deux forces de réaction partielles (r, r') appliquées chacune à l'un desdits poussoirs en sens opposé auxdites demiforces de commande (Fc/2), chaque poussoir (42, 142) étant de ce fait soumis à deux forces opposées: une demi-force de commande (Fc/2) et une force de réaction partielle (r, r') dont la résultante constitue ladite force pilote (Fp, Fp'), ledit élément de transmission (55) étant susceptible d'être en contact avec lesdits poussoirs (42, 142) suivant deux modes: un premier mode, lorsque les deux orifices d'entrée (28, 138) reçoivent du fluide sous pression, dans lequel les surfaces de contact entre l'élément de transmission (55) et les poussoirs (42, 142) sont disposées de façon symétrique par rapport audit axe de symétrie (YY), et un second mode, lorsque seul l'un des deux orifices d'entrée reçoit du fluide sous pression, dans lequel, suite à un basculement de l'élément de transmission (55), les surfaces de contact entre ce dernier et les poussoirs (42, 142) sont disposées de façon dissymétrique par rapport audit axe de symétrie (YY), dont il résulte une répartition de la force de réaction (R) en deux forces partielles (r, r') inégales et une inégalité correspondante des deux forces pilotes (Fp, Fp').

2. Correcteur de freinage selon la revendication 1, pour lequel la force de commande (Fc) est générée par une pression de commande (Ph), caractérisé en ce que lesdits moyens diviseurs comprennent une chambre de commande (40, 46, 140) définie dans ledit couvercle (14) et dans laquelle règne la pression de commande (Ph), lesdits poussoirs (42, 142) se projetant de façon étanche dans ladite chambre de commande.

3. Correcteur de freinage selon la revendication 2, pour un véhicule comportant un circuit de suspension hydraulique, caractérisé en ce que ladite pression de commande (Ph) est une pression provenant dudit circuit de suspension hydraulique.

4. Correcteur de freinage selon l'une quelconque des revendications 1 à 3, caractérisé en ce que lesdits moyens élastiques (51) comprennent un ressort de réaction comprimé entre une plaque de butée (53) et ledit élément de transmission (55), ledit ressort engendrant sur ce dernier une force résultante (R) coaxiale à l'axe de symétrie (YY).

5. Correcteur de freinage selon la revendication 4, caractérisé en ce que ladite plaque du butée (53) comporte des moyens de positionnement axial réglables (62, 63, 64, 65) comprenant une tige (68) fixée à l'une de ses extrémités à ladite plaque (53), ladite tige traversant ledit élément transmetteur (55) et ledit couvercle (14) et se terminant par un filetage (65) à son autre extrémité, un écrou (64) étant vissé sur ledit filetage et en contact avec ledit couvercle.

6. Correcteur de freinage selon l'une quelconque des revendications 3 à 5, caractérisé en ce que lesdits poussoirs (42, 142) comportent chacun une partie de grand diamètre et un prolongement de diamètre réduit (50, 150) séparés par un épaulement plan (58, 158) et que ledit élément de transmission (55) est un disque plan comportant deux ouvertures (56, 156) symétriques de diamètre légèrement supérieur à celui des prolongements des poussoirs, ledit élément de transmission étant maintenu par lesdits moyens élastiques en appui contre lesdits épaulements plans desdits poussoirs.

## Patentansprüche

1. Bremskorrektor für ein Zweikreisbremssystem eines Kraftfahrzeuges, mit einem Gehäuse (12), zwei identischen parallel zueinander verlaufenden Bohrungen (16, 116) im Gehäuse, welche eine zwischen ihnen liegende Symmetrieachse vorgeben, wobei eine jede dieser Bohrungen mit einer zugeordneten Einlaßöffnung (28, 128) und einer zugeordneten Auslaßöffnung (30, 130) in Verbindung steht, mit zwei identischen Kolben (22, 122), die in den Bohrungen verschiebbar sind und von denen ein jeder die Verschiebung eines Ventilgliedes (34, 134) steuert, durch welches ein Druckmittelstrom von derjenigen der Einlaßöffnungen zu derjenigen der Auslaßöffnungen gesteuert wird, die ihm zugeordnet ist, wobei ein jeder der Kolben (22, 122) ein Ende (36, 136) hat, welches über das Gehäuse (12) nach außen herausgeführt ist, und mit einer Verteilereinheit (14, 42, 142, 51, 55), welche aus einer Betätigungskraft (Fc) zwei Steuerkräfte (Fp, Fp') erzeugt, welche auf die Enden (36, 136) der Kolben (22, 122) so einwirken, daß diese zum Inneren des Gehäuses (12) hin gedrückt werden, in welcher Betätigungsrichtung der Aufbau eines Druckmittelstromes herbeigeführt wird, wobei das Druckmittel die Kolben in Richtung aus dem Gehäuse heraus beaufschlagt, in welcher Betätigungsrichtung der Druckmittelstrom unterbrochen wird, wobei die Verteilereinheit Teilmittel (14, 42, 142) zum Aufteilen der Betätigungskraft (Fc) in zwei gleiche Halbbetätigungskräfte (Fc/2) aufweist, die einzeln die Kolben (22, 122) beaufschlagen und letztere in Richtung zum Inneren des Gehäuses zu bewegen suchen, dadurch gekennzeichnet, daß die Verteilereinheit aufweist: einen fest auf dem Gehäuse (12) angebrachten Deckel (14), zwei identische Stößel (42, 142), die parallel zu dem Kolben im Deckel (14) verschiebbar sind und an die Enden (36, 136) der letzeren anschlagen können, wobei die Teilmittel die beiden Halbbetätigungskräfte (Fc/2) über die Stößel (42, 142) auf die Kolben ausüben, elastische Mittel (51), die eine Reaktionskraft (R) erzeugen, durch welche die Kolben zur Außenseite des Gehäuses hin vorgespannt sind, und ein Übertragungselement (55), welches mit den Stößeln und nur mit diesen in Berührung steht und die Reaktionskraft (R) in zwei Teilreaktionskräfte (r, r') zerlegt, von denen jeweils eine auf einen der Stößel in umgekehrter Richtung wie die Halbbetätigungskräfte (Fc/2) gegeben wird, so daß jeder Stößel (42, 142) mit zwei entgegengesetzt gerichteten Kräften beaufschlagt ist, nämlich einer Halbbetätigungskraft (Fc/2) und einer Teilreaktionskraft (r, r'), wobei die Resultierende dieser Kräfte die Steuerkraft (Fp, Fp') darstellt, wobei das Übertragungselement (55) mit den Stößeln (42, 142) auf zwei verschiedene Arten und Weisen in Berührung treten kann: auf eine erste Art und Weise, wenn die Einlaßöffnungen (28, 128) beide mit Druckflüssigkeit gespeist sind, wobei dann die Berührflächen zwischen dem Übertragungselement (55) und den Stößeln (42, 142) symmetrisch zur Symmetrieachse (YY) angeordnet sind, und auf eine zweite Art und Weise, wenn nur eine der beiden Einlaßöffnungen mit Druckmittel beaufschlagt ist, wobei dann infolge einer Verkippung des Übertragungselementes (55) die Berührflächen zwischen dem letzteren und den Stößeln (42, 142) bezüglich der Symmetrieachse (YY) asymmetrisch angeordnet sind, woraus sich eine Aufteilung der Reaktionskraft (R) in zwei ungleiche Teilkräfte (r, r') ergibt und eine entsprechende Ungleichheit der beiden Steuerkräfte (Fp, Fp') erhalten wird.

2. Bremskorrektor nach Anspruch 1, bei welchem die Betätigungskraft (Fc) durch einen Betätigungsdruck (Ph) erzeugt wird, dadurch gekennzeichnet, daß die Teilmittel eine im Deckel (14) ausgebildete Betätigungskammer (40, 46, 140) aufweisen, in welcher der Betätigungsdruck (Ph) herrscht, wobei sich die Stößel (42, 142) druckmitteldicht in die Betätigungskammer hinein erstrecken.

3. Bremskorrektor nach Anspruch 2 für ein Fahrzeug mit einem Kreislauf für eine hydraulische Aufhängung, dadurch gekennzeichnet, daß der Betätigungsdruck (Ph) ein Druck ist, der aus dem Druckmittelkreis für die hydraulische Aufhängung stammt.

4. Bremskorrektor nach einem der Ansprüche 1 bis 3, dadurch gekennzeichnet, daß die elastischen Mittel (51) durch eine Abstützfeder gebildet sind, welche zwischen eine Anschlagplatte (53) und das Übertragungselement (55) zusammengedrückt ist, wobei diese Feder auf das Übertragungselement eine resultierende Kraft (R) ausübt, die koaxial zur Symmetrieachse (YY) ist.

5. Bremskorrektor nach Anspruch 4, dadurch gekennzeichnet, daß die Anschlagplatte (53) axial einstellbare Positioniermittel (62, 63, 64, 65) aufweist, darunter eine Stange (68), die am einen der Enden der Platte (53) befestigt ist, das Übertragungselement (55) und den Deckel (14) durchsetzt und an ihrem äußeren Ende ein Gewinde (65) trägt, auf welchem eine Mutter (64) aufgeschraubt ist, die in Berührung zum Deckel steht.

6. Bremskorrektor nach einem der Ansprüche 3 bis 5, dadurch gekennzeichnet, daß die Stößel (42, 142) jeweils einen großen Durchmesser aufweisenden Abschnitt und eine Verlängerung mit geringerem Durchmesser (50, 150) aufweist, wobei diese Abschnitte durch eine ebene Schulter voneinander getrennt sind, und daß das Übertragungselement (55) eine ebene Scheibe ist, die mit zwei symmetrischen Öffnungen (56, 156) versehen ist, deren Durchmesser geringfügig größer als derjenige der Verlängerungen der Stößel ist, wobei das Übertragungselement durch die elastischen Mittel in Anlage an den ebenen Schultern der Stößel gehalten ist.

**Claims**

1. A brake corrector for a double brake circuit of an automotive vehicle, comprising a housing (12), two identical bores (16, 116) formed in said housing in parallel orientation defining an intermediate symmetry axis and communicating with corresponding inlet ports (28, 128) and outlet ports (30, 130), two identical pistons each adapted to displace a valve member (34, 134) controlling pressure fluid flow between the corresponding inlet and outlet ports, said pistons each having an end portion (36, 136) projecting from said housing (12), and a distributing assembly (14, 42, 142, 51, 55) adapted to transform an operating force (Fc) into two control forces (Fp, Fp') acting on said end portions so as to bias the pistons (22, 122) towards the interior of said housing (12) in the sense of establishing pressure fluid flow, the pressure fluid biassing the pistons in outward direction of said housing in the sense of interrupting pressure fluid flow, the distributing assembly including distributing means (14, 42, 142) to divide the operating force (Fc) into two operating semi-forces (Fc/2) of equal magnitude which are separately applied to the pistons, respectively, and bias the latter towards the exterior of said housing, characterized in that the distributing assembly comprises: a cover member (14) fixedly arranged on said housing (12), two identical push members (42, 142) arranged in said cover member (14) for sliding movement parallel to said pistons (22, 122) and adapted to engage the end portions (36, 136) of the latter, said distributing means applying the operating semi-forces (Fc/2) to said pistons (22, 122) by intermediary of said push members (42, 142), elastic means (51) providing a reaction force (R) biassing the pistons towards the exterior of said housing, and a force transmitting element (55) engaging the push members and only those, the transmitting element dividing the reaction force (R) into two reaction part-forces (r, r'), each of which is applied to an associated one of the push members (42, 142) in a sense being opposite to the direction of the operating semi-forces, each push member (42, 142) thus receiving two opposite forces: an operating semi-force (Fc/2) and a reaction part-force (r, r'), the resultant force of which forms said control force, the transmitting element (55) being adapted to engage said push members (42, 142) in two different modes: a first mode, when both inlet ports (28, 128) receive pressure fluid, the contact surfaces between the transmitting element (55) and the push members (42, 142) then being arranged symmetrically with respect to said symmetry axis, and a second mode when only one of the inlet ports receive pressure fluid, wherein due to pivoting movement of the transmitting element (55) the contact surfaces between the latter and the push members are arranged in an asymmetric way with respect to the symmetry axis (YY), the reaction force (R) thus being divided into two part-forces (r, r') of different magnitude resulting in a corresponding inequality of the two control forces (Fp, Fp').

2. A brake corrector as in claim 1, wherein the operating force (Fc) is provided by an operating pressure (Ph), characterized in that said distributing means comprise a control chamber (40, 46, 140) formed in said cover member (14) and receiving the operating pressure (Ph), said push members (42, 142) extending into the operating chamber in fluid tight manner.

3. A brake corrector as in claim 2, for use with a vehicle having a hydraulic circuit associated to a hydraulic suspension, characterized in that said operating pressure (Ph) is a pressure provided by said hydraulic circuit of the hydraulic suspension.

4. A brake corrector as in one of claims 1 to 3, characterized in that said elastic means (51) comprise a reaction spring urged between an abutment plate (53) and said transmitting element (55), said spring exerting onto the latter a resulting force (R) being coaxial to the symmetry axis (YY).

5. A brake corrector as in claim 4, characterized in that the abutment plate (53) comprises axially adjustable positioning means (62, 63, 64, 65) including a rod (68) fixed to one of the ends of said plate (53), said rod extending through said transmitting element (55) and said cover member (14), threadings (65) being provided on its other end portion, a nut (64) screwed onto said threadings engaging said cover member.

6. A brake corrector as in one of claims 3 to 5, characterized in that said push members (42, 142) each are formed with a large diameter portion and an extension of reduced diameter (50, 150), said portions defining an intermediate flat shoulder (58, 158), and in that the transmitting element (55) is formed by a flat disk having two symmetric openings (56, 156), the diameter of which is slightly greater than the diameter of the extensions of the push members, said transmitting element being kept in engagement with the flat shoulders of said push members by the bias of said elastic means.

# FIG_1

FIG_2

FIG_3